# EUROPEAN PATENT APPLICATION

(11) **EP 4 692 204 A1**
(43) Date of publication of application: **11.02.2026**
(21) Application number: 24780614.4
(22) Date of filing: 28.03.2024
(51) Int. Cl.: C08L 23/00, C08L 23/04, C08L 23/10, H01B 9/02

(54) **INSULATING RESIN COMPOSITION FOR ELECTRIC POWER CABLES, AND ELECTRIC POWER CABLE**

(30) Priority: 30.03.2023 JP 2023056397
(71) Applicant: FURUKAWA ELECTRIC CO., LTD., Tokyo 100-8322 (JP)
(72) Inventor: MIEDA Tetsuya, Tokyo 100-8322 (JP); KANAYA Takahiro, Tokyo 100-8322 (JP)
(74) Representative: Winter, Brandl - Partnerschaft mbB
(86) International application number: PCT/JP2024/012598
(87) International publication number: WO 2024/204513

(57) **Abstract**

The present invention provides: an insulating resin composition for electric power cables, the insulating resin composition being capable of suppressing growth of a water tree and suppressing an increase in the dielectric loss tangent even in an environment having much moisture; and an electric power cable. This insulating resin composition for electric power cables contains a component (a), a component (b), and a component (c). The component (a) is an unmodified polyolefin resin. The component (b) is a resin which contains, as a constituent, at least one compound that is selected from among unsaturated organic acids and derivatives thereof. The component (c) is an ethylene copolymer which contains a carboxylate ester.

## Description

### TECHNICAL FIELD

The present disclosure relates to an insulating resin composition for electric power cable and relates to an electric power cable.

### BACKGROUND ART

In an insulating resin of an electric power cable laid in a water-rich environment such as the ground or the seabed, a dendritic defect called a water tree, which is generated from foreign matters or air bubbles (voids) in the resin, is likely to occur.

Due to dielectrophoresis of water generated by flowing electricity in the electric power cable, the water tree is generated and grown by concentration of the moisture in the cable insulating resin on the interface of the foreign matters or voids. Since the water tree causes breakage of the electric power cable, it is required to suppress growth of the water tree.

For the purpose of suppressing the growth of such water tree, in the cross-linked polyethylene (XLPE) resin, a hydrophilic molecule, for example polyethylene glycol, or a polyethylene glycol derivative in which the terminal of polyethylene glycol is modified with an olefin or acrylic acid to enhance compatibility with XLPE is added to hydrophobic polyethylene in some cases. By introducing a hydrophilic molecular structure such as polyethylene glycol, moisture is uniformly dispersed in the XLPE resin, so that the concentration of moisture on the interface of the foreign matters or the voids is suppressed, and the generation and growth of water tree is suppressed.

Patent Document 1 discloses a polyolefin composition for electrical insulation including polyolefin or crosslinked polyolefin and a small amount of high molecular weight polyethylene glycol. In addition, it also disclose a technique in which a low hydrophilic material, such as polypropylene glycol, or a hydrophobic material does not prevent the generation of water tree in an insulator.

However, conventional water-tree-retardant type XLPE resins obtained by adding polyethylene glycol or a polyethylene glycol derivative can contain much more water molecules than XLPE resin to which polyethylene glycol or a polyethylene glycol derivative is not added. Therefore, when the electric power cable where the conventional water-tree-retardant type XLPE resin is used as an insulator is used for a long period of time in a water-rich environment, the dielectric loss tangent (tan δ) of the XLPE resin increases due to a large amount of water molecules transferred from the outside of the cable into the XLPE resin, and as a result, the electric power transmission efficiency of the electric power cable decreases.

Such an increase in dielectric loss tangent due to the addition of hydrophilic molecules is observed not only in XLPE resins but also in polypropylene-based insulators without crosslinking. Therefore, a water-tree-retardant type XLPE resin which does not contain a polyethylene glycol or polyethylene glycol derivative having high hydrophilicity is preferable.

### Citation List

### Patent Document

Patent Document 1: US Patent No. 4305849

### DISCLOSURE OF THE INVENTION

### Problems to be Solved by the Invention

An object of the present disclosure is to provide an insulating resin composition for electric power cable and an electric power cable which can suppress growth of water tree and can suppress an increase in a dielectric loss tangent even in a water-rich environment.

### Means for Solving the Problems

[1] An insulating resin composition for electric power cable, including: a component (a); a component (b); and a component (c), in which the component (a) is an unmodified polyolefin resin, the component (b) is a resin including at least one type of compound selected from unsaturated organic acids or derivatives thereof as a constituent component, and the component (c) is an ethylene-based copolymer including a carboxylate ester.
[2] In the insulating resin composition for electric power cable as described in [1] above, the component (a) is an unmodified polypropylene.
[3] The insulating resin composition for electric power cable as described in [2] above, further including a component (d), in which the component (d) is an olefin-based copolymer or a styrene-based copolymer.
[4] In the insulating resin composition for electric power cable as described in [1] above, the component (a) is an unmodified polyethylene.
[5] The insulating resin composition for electric power cable as described in [4] above, further including a component (e), in which the component (e) is a crosslinking agent.
[6] In the insulating resin composition for electric power cable as described in [5] above, the crosslinking agent is an organic peroxide.
[7] In the insulating resin composition for electric power cable as described in any one of [1] to [6] above, the component (b) is at least one type of resin selected from polyolefins in which at least one type of compound selected from maleic anhydride or a derivative thereof is grafted, or maleic anhydride copolymers.
[8] In the insulating resin composition for electric power cable as described in any one of [1] to [7] above, the component (c) is at least one type of ethylene-based copolymer selected from ethylene-methacrylic acid ester copolymers, ethylene-acrylic acid ester copolymers, or ethylene-vinyl acetate copolymers.
[9] An electric power cable including: a conductor; an internal semiconductor layer disposed on an outer side of the conductor, and encircling the conductor; an insulation layer disposed on an outer side of the internal semiconductor layer, encircling the internal semiconductor layer, and consisting of the insulating resin composition for electric power cable as described in any one of [1] to [8] above; and an external semiconductor layer disposed on an outer side of the insulation layer, and encircling the insulation layer.

### Effects of the Invention

According to the present disclosure, it is possible to provide an insulating resin composition for electric power cable and an electric power cable which can suppress the growth of water tree and can suppress the increase in the dielectric loss tangent even in a water-rich environment.

### BRIEF DESCRIPTION OF THE DRAWINGS

[FIG. 1] FIG. 1 is a cross-sectional view showing an example of an electric power cable to which the insulating resin composition for electric power cable of an embodiment is applied.
[FIG. 2] FIG. 2 is a schematic view showing a water tree test.

### PREFERRED MODE FOR CARRYING OUT THE INVENTION

Hereinafter, embodiments will be described in detail.

As a result of intensive studies on suppression of growth of water tree and suppression of an increase in dielectric loss tangent, the present inventors have found the following. In the insulating resin composition, an ethylene-based copolymer including a carboxylate ester can suppress water tree while suppressing moisture incorporation, as compared with polyethylene glycol or a polyethylene glycol derivative having high hydrophilicity. However, similarly to polyethylene glycol, which is conventionally used as a water tree retardant, the ethylene-based copolymer containing a carboxylate ester also increases the dielectric loss tangent of the insulating resin composition. In order to solve such problems, the present inventors have clarified that a resin including, as a constituent component, at least one type of compound selected from unsaturated organic acids or derivatives thereof can suppress an increase in dielectric loss tangent of an insulating resin composition due to addition of an ethylene-based copolymer including a carboxylate ester excluding polyethylene glycol and a polyethylene glycol derivative; and have found that the growth of water tree in the insulating resin composition can suppress and the increase in the dielectric loss tangent even in a water-rich environment can suppress. The present disclosure has been completed based on such findings.

The insulating resin composition for electric power cable according to the embodiment includes a component (a), a component (b), and a component (c), in which the component (a) is an unmodified polyolefin resin, the component (b) is a resin including, as a constituent component, at least one type of compound selected from unsaturated organic acids or derivatives thereof, and the component (c) is an ethylene-based copolymer including a carboxylate ester.

The insulating resin composition electric power cable of the embodiment includes, as constituent components, the component (a), the component (b), and the component (c). The insulating resin composition is an insulator.

The component (a) contained in the insulating resin composition is an unmodified polyolefin resin, and is preferably an unmodified polypropylene or an unmodified polyethylene.

The unmodified polypropylene is preferably homopolypropylene, random polypropylene or block polypropylene. The random polypropylene is preferably a random copolymer of ethylene or an α-olefin, and propylene, and the content of the propylene component is preferably 90 wt% or more. The block polypropylene is preferably a copolymer of homopolypropylene, ethylene, and an α-olefin. As used herein, the α-olefin is preferably an olefin having 3 or more and 8 or less carbon atoms. When the component (a) is the unmodified polypropylene, the insulating resin composition can be recycled.

The unmodified polyethylene can be produced in any of a low-pressure process or a high-pressure process, and is preferably a low-density polyethylene (LDPE) produced in a high-pressure process.

The component (b) contained in the insulating resin composition is a resin including, as a constituent component, at least one type of compound selected from unsaturated organic acids or derivatives thereof and is at least any of a resin in which a polymer is grafted by the compound, or a copolymer resin of the compound and another monomer. The component (b) suppresses an increase in the dielectric loss tangent of the insulating resin composition due to the component (c) which is a component for suppressing water tree. When the insulating resin composition includes the component (b), an increase in the dielectric loss tangent of the insulating resin composition can be suppressed even when the insulating resin composition is exposed to a water-rich environment. The blending amount of the component (b) contained in the insulating resin composition is preferably 1.0 wt% or more and 20.0 wt% or less. When the blending amount of the component (b) is less than 1.0 wt%, suppression of an increase in the dielectric loss tangent is insufficient, and when the blending amount of the component (b) exceeds 20.0 wt%, the resin sticks to a wall surface inside the extruder during coating of the conductor by the extrusion, which generates a gel, and the gel mixed into the insulator deteriorates the dielectric loss tangent of the electric power cable and becomes a starting point of generating water tree.

The unsaturated organic acid includes unsaturated dicarboxylic acids, unsaturated dicarboxylic acid anhydrides, and unsaturated dicarboxylic acid derivatives. As the unsaturated dicarboxylic acid, maleic acid, fumaric acid and itaconic acid are preferable. As the unsaturated dicarboxylic acid anhydride, maleic anhydride (MAH) and itaconic anhydride are preferable. As the unsaturated dicarboxylic acid derivative, monomethyl maleate, monoethyl maleate, diethyl maleate, monomethyl fumarate, dimethyl fumarate, diethyl fumarate, maleic acid monoamide, maleimide, N-methylmaleimide, N-phenylmaleimide, N-cyclohexylmaleimide, and triallyl isocyanurate are preferable. These can be used alone or in combination of two or more types thereof. Among them, as the unsaturated organic acid, maleic anhydride, which is a five-membered cyclic acid anhydride, is preferable.

Polymers for grafting the unsaturated organic acid or the derivative thereof include a polyolefin typified by polyethylene, polypropylene, or the like, an olefin-based copolymer typified by an ethylene-methacrylic acid ester copolymer, an ethylene-acrylic acid ester copolymer, an ethylene-vinyl acetate copolymer, or the like, and a styrene-based copolymer typified by a styrene-butadiene block copolymer (SBR), a styrene-butadiene-styrene block copolymer (SBS), a styrene-isoprene-styrene block copolymer (SIS), a styrene-ethylene-butylene-styrene block copolymer (SEBS), a styrene-ethylene-ethylene-propylene-styrene block copolymer (SEEPS), or the like.

A particularly preferred polymer for grafting the unsaturated organic acid and the derivative thereof is polypropylene when the unmodified polyolefin resin as the component (a) is the unmodified polypropylene, and polyethylene when the unmodified polyolefin resin as the component (a) is the unmodified polyethylene, from the viewpoint of resin compatibility.

The graft amount of the unsaturated organic acid and the derivative thereof in the component (b) is preferably 0.01 wt% or more and 2.00 wt% or less in the graft resin as the component (b). Since the unsaturated organic acid is uniformly dispersed in the insulating resin composition by using the resin where the unsaturated organic acid is grafted in the range, the dielectric loss tangent in the system can be uniformly lowered.

When the unsaturated organic acid and the derivative thereof is maleic anhydride, the content ratio of the maleic anhydride in the insulating resin composition is preferably 0.01 wt% or more and less than 0.50 wt%. When the maleic anhydride is contained in the insulating resin composition in the range, the dielectric loss tangent in the system can be uniformly suppressed. In particular, when the maleic anhydride is contained in the content of more than 0.50 wt%, the maleic anhydride graft resin sticks to the metallic inner wall of a kneading apparatus or the extruder, which causes scorching. In addition, the adhesion of the maleic anhydride graft resin may lower the uniformity of the resin composition, and as a result, the growth of water tree may not be efficiently suppressed. Further, when the content ratio is 0.47 wt% or less, the non-uniformity of the resin composition due to the adhesion of the resin is less likely to occur.

The graft resin can be prepared, for example, by mixing and heating a polymer resin, an antioxidant, a modifying monomer, and an organic peroxide as raw materials, in an extruder and reacting them, according to the method described in paragraph [0098] of Japanese Patent No. 6205032. Further, a commercially available maleic anhydride graft resin can be purchased and used. Examples thereof include ADMER (registered trademark) manufactured by Mitsui Chemicals, MODIC (registered trademark) manufactured by Mitsubishi Chemical Corporation, YOUMEX (registered trademark) manufactured by Sanyo Chemical Industries, TUFTEC (registered trademark) M manufactured by Asahi Kasei Corporation, OREVAC (registered trademark) manufactured by SK Functional Polymer, or the like.

The monomer constituting the copolymer resin with the unsaturated organic acid and the derivative thereof is preferably an ethylene monomer, a propylene monomer, a butene monomer, an olefin monomer having 5 or more carbon atoms, a styrene monomer, a methacrylic acid ester monomer, an acrylic acid ester monomer, or a vinyl acetate monomer.

The component (b) is preferably at least one type of resin selected from polyolefins in which at least one type of compound selected from maleic anhydride or a derivative thereof is grafted, or maleic anhydride copolymers. As the graft resin of the unsaturated organic acid and the derivative thereof, a maleic anhydride-grafted polyethylene resin (MAH-g-PE) and a maleic anhydride-grafted polypropylene resin (MAH-g-PP) are preferable. The copolymer resin of the unsaturated organic acid and the derivative thereof is preferably an ethylene-maleic anhydride copolymer (Et-MAH copolymer) resin.

Examples of the styrene-maleic anhydride copolymer include XIRAN (registered trademark) manufactured by Polyscope, ALASTAR manufactured by Arakawa Chemical Industries, and examples of the copolymer of an α-olefin and maleic anhydride include DIACARNA (registered trademark) manufactured by Mitsubishi Chemical Corporation, FUSABOND (registered trademark) manufactured by Dow Chemical Corporation, and the like. Examples of ternary copolymer of ethylene-acrylic acid ester-maleic anhydride include LOTADER (registered trademark) MAH manufactured by SK Functional Polymer, and examples of the ternary copolymer of ethylene-vinyl acetate-maleic anhydride include OREVAC (registered trademark) T manufactured by SK Functional Polymer.

The component (c) contained in the insulating resin composition is an ethylene-based copolymer including a carboxylate ester, and is a component that suppresses the growth of water tree. Among them, the component (c) is preferably at least one type of ethylene-based copolymer selected from ethylene-methacrylic acid ester copolymers, ethylene-acrylic acid ester copolymers, or ethylene-vinyl acetate copolymers (EVA). The ethylene-methacrylic acid ester copolymer is preferably an ethylene-methyl methacrylate copolymer (EMMA), an ethylene-ethyl methacrylate copolymer, or an ethylene-butyl methacrylate copolymer. The ethylene-acrylic acid ester copolymer is preferably an ethylene-methyl acrylate copolymer, an ethylene-ethyl acrylate copolymer (EEA), or an ethylene-butyl acrylate copolymer.

Examples of preferable ethylene-methacrylic acid ester copolymers, ethylene-acrylic acid ester copolymers, and ethylene-vinyl acetate copolymers include ACRYFT (registered trademark) manufactured by Sumitomo Chemical Company, EEA resin and EVA resin manufactured by ENEOS NUC, REXPEARL (registered trademark) EEA and NOVATEC (registered trademark) EVA manufactured by Japan Polyethylene, and EVAFLEX (registered trademark) manufactured by Dow-Mitsui Polychemicals.

The lower limit of the content ratio of the component (c) contained in the insulating resin composition is preferably 1.0 wt% or more for efficient suppression of water tree, and preferably 2.0 wt% or more for uniform suppression of water tree. The upper limit of the content ratio of the component (c) is preferably 40.0 wt% or less in order to suppress water absorption of the insulating resin composition, and is preferably 20.0 wt% or less in order to efficiently suppress an increase of the dielectric loss tangent due to hydrophilic molecules.

In addition to the components (a) to (c), the insulating resin composition may further include an olefin-based copolymer or a styrene-based copolymer, which is a component (d) as an elastomer. It is preferable that the insulating resin composition includes the component (d) because flexibility of the insulating resin composition is enhanced. In particular, when the unmodified polyolefin resin as the component (a) is an unmodified polypropylene, the blending of these copolymers is effective for improving the flexibility of the insulating resin composition.

The olefin-based copolymer is a copolymer of ethylene or propylene with an α-olefin. The α-olefin is preferably an α-olefin having 3 to 8 carbon atoms. The olefin-based copolymer is preferably an ethylene-propylene copolymer.

The olefin-based copolymer may be blended as an olefin-based thermoplastic elastomer described later. A polymerization catalyst of the olefin-based copolymer is preferably a Ziegler-Natta catalyst, a metallocene catalyst, or a constrained geometry catalyst, and the olefin-based copolymer may be prepared using a vapor phase method, a liquid phase method, or a slurry polymerization method.

The olefin-based thermoplastic elastomer is preferably a resin obtained by multistage vapor phase polymerization. The resin obtained by the multistage vapor phase polymerization is a resin composition including polypropylene and an olefin-based copolymer, specifically, a resin composition including polypropylene, and an ethylene-α-olefin copolymer rubber or a propylene-α-olefin copolymer rubber, improving impact resistance strength (particularly, impact resistance strength at low temperature) while maintaining the rigidity and heat resistance of polypropylene. The resin obtained by the multistage vapor phase polymerization is generally called a heterophasic copolymer, an impact copolymer, a reactor-made alloy, a reactor-made thermoplastic elastomer, or a reactor TPO (Thermoplastic Alloy).

In the multistage vapor phase polymerization, finely powdered resin components generated in the respective stages are blended in the reactor during polymerization. By melt-kneading these, a resin with a microphase-separated structure having a finer sea of a propylene polymer component such as polypropylene, etc. and islands of an elastomer component (copolymer rubber component) can be obtained as compared with a conventional melt-kneading method in which pellets of polypropylene and elastomer are blended and melt-kneaded. An average particle diameter of the elastomer component in the insulating resin composition is preferably 5 µm or less, and more preferably 1 µm or less. As used herein, the average particle diameter is obtained from the average major diameter of the islands of the elastomer component, the major diameters being obtained by photographing a frozen fractured surface of the resin by using, for example, a transmission electron microscope (TEM).

As a commercially available product of the olefin-based thermoplastic elastomer obtained by the multistage vapor phase polymerization, a series of resins called Catalloy process resins, for example, a product group of Adflex, Hifax, Softell, and Adsyl (registered trademark) (all manufactured by Lyondell Basell) is suitable. In addition, product groups such as Tafmer (registered trademark) PN (manufactured by Mitsui Chemicals), Tafthren (registered trademark) (manufactured by Sumitomo Chemical Company), Newcon (registered trademark) (manufactured by Japan Polypropylene Corporation), and Prime TPO (registered trademark) (manufactured by Prime Polymer) are also preferably used.

In the case where the unmodified polyolefin resin of the component (a) is an unmodified polypropylene, if the insulating resin composition further includes the crosslinking agent of the component (e), the polypropylene undergoes rather decomposition reaction than crosslinking reaction as a main reaction, which is not preferable. However, in the case where the unmodified polyolefin resin of the component (a) is an unmodified polyethylene, when the insulating resin composition further includes the crosslinking agent of the component (e), polyethylene is crosslinked to obtain a crosslinked body of the insulating resin composition, and the dielectric breakdown voltage of the insulating resin composition is increased, and hence this is preferable. The crosslinking agent is preferably an organic peroxide.

Among them, the crosslinking agent is preferably di-t-hexyl peroxide (Perhexyl D manufactured by NOF Company), dicumyl peroxide (Percumyl D manufactured by NOF Company), 2,5-dimethyl-2,5-di(t-butylperoxy)hexane (Perhexa 25B manufactured by NOF Company), α,α'-di(t-butylperoxy)diisopropylbenzene (Perbutyl P manufactured by NOF Company), t-butyl cumyl peroxide (Perbutyl C manufactured by NOF Company), and di-t-butyl peroxide (Perbutyl D manufactured by NOF Company). These can be used alone or in combination of two or more types thereof. Particularly, dicumyl peroxide is preferable.

Regarding the content ratio of the crosslinking agent contained in the insulating resin composition, the lower limit value is preferably 0.1 wt% or more, and more preferably 0.5 wt% or more, and the upper limit value is preferably 5.0 wt% or less, and more preferably 3.0 wt% or less. In a case where the content ratio of the crosslinking agent is within the above range, when the insulating resin composition is extruded on the conductor by an extruder at a temperature of 120°C or more and 135°C or less, the insulating resin composition can form an insulation layer without causing unnecessary gelation of the resin, and the insulation layer can be satisfactorily crosslinked in the crosslinking step after the formation of the insulation layer.

The insulating resin composition may include an antioxidant in addition to the above components. The antioxidant is preferably a hindered phenol-based antioxidant or a semi-hindered phenol-based antioxidant, which is mainly for radical scavenging, or a phosphorus-based antioxidant or a sulfur-based antioxidant, which is mainly for peroxide decomposition. These can be used alone or in combination of two or more types thereof.

Regarding the content ratio of the antioxidant contained in the insulating resin composition, the lower limit value is preferably 0.01 wt% or more, and more preferably 0.20 wt% or more, and the upper limit value is preferably 1.00 wt% or less, and more preferably 0.60 wt% or less. When the content ratio of the antioxidant is within the above range, oxidative degradation of the crosslinked product of the insulating resin composition can be favorably suppressed.

In addition, the insulating resin composition may include various substances in addition to the above-described components, as long as the growth suppression of water tree and the decrease in the dielectric loss tangent of the insulating resin composition are not inhibited. Examples of the various substances include a stabilizer, a lubricant, an inorganic filler, a surface treatment agent, a flame retardant, an acid scavenger, a voltage stabilizer, etc. However, the median diameter (D50) of the inorganic filler is preferably 10 µm or less and 10.0 wt% or less, and when the inorganic filler exceeds these values, the inorganic filler may become a generation nucleus of water tree. When the insulating resin composition is held at 600°C in a nitrogen atmosphere, the organic component is decomposed and volatilized, and the inorganic filler can be obtained as a residue, so that the inorganic filler can be measured by a laser diffraction scattering method.

The insulating resin composition can be obtained by melt-kneading raw materials such as the component (a), the component (b), the component (c), etc. As an apparatus for the melt-kneading, an existing kneading machine such as a single-screw or twin-screw extruder, Banbury, kneader or the like can be used. In particular, it is preferable to perform resin extrusion by attaching a metal mesh filter having a sieve size of 100 µm or less to a single-screw or twin-screw extruder capable of performing continuous kneading processing in order to remove foreign matters in the resin. In addition, with the insulating resin composition to which the crosslinking agent of the component (e) is added, kneading is preferably performed at 120°C or more and 135°C or less in order to suppress crosslinking of the resin.

The specific gravity of the insulating resin composition is preferably 0.90 or more and 0.93 or less.

The dielectric loss tangent of the insulating resin composition is preferably 1.0% or less, and more preferably 0.5% or less as measured under conditions of 90°C and 30 kV/mm in accordance with test methods for rubber or plastic insulated wires and cables of JIS C 3005. When the dielectric loss tangent of the insulating resin composition is within the above range, the electric power cable to which the insulation layer made of the insulating resin composition is applied has a small dielectric loss tangent, and thus the energy loss is reduced and the electric power transmission efficiency can be improved.

In addition, in order to suppress the growth of water tree in the insulating resin composition, the moisture absorption rate of the insulating resin composition after the insulating resin composition having a thickness of 1 mm is stored in a thermohygrostat bath at a temperature of 70°C and a relative humidity of 90% for 24 hours is preferably 100 ppm or more, and more preferably 150 ppm or more. By imparting the hygroscopic property to the insulating resin composition, the moisture in the insulating resin composition is uniformly dispersed, and the growth of water tree in the insulating resin composition can be suppressed. In addition, from the viewpoint of suppressing an increase in the dielectric loss tangent, the moisture absorption rate of the insulating resin composition is preferably 800 ppm or less, and more preferably 350 ppm or less.

Such an insulating resin composition is suitably used as an insulating material for electric power cable laid under a water-rich environment such as the ground or the seabed. In the electric power cable in which the insulating resin composition is applied to the insulation layer, the growth of water tree in the insulation layer can be suppressed and the increase in the dielectric loss tangent can be suppressed even in a water-rich environment, and thus the electric power cable can efficiently transmit power even when used at a high pressure or an ultrahigh pressure.

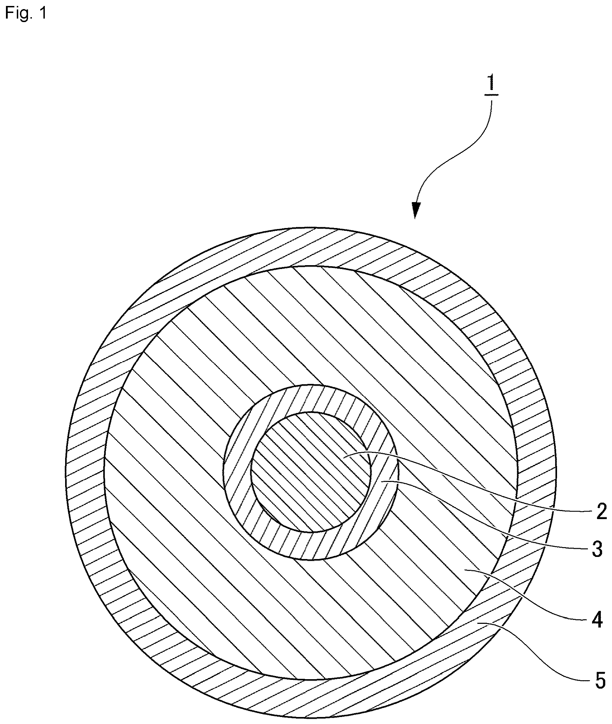

FIG. 1 is a cross-sectional view showing an example of an electric power cable to which the insulating resin composition of the embodiment is applied.

As shown in FIG. 1, an electric power cable 1 includes a conductor 2, an internal semiconductor layer 3 disposed on an outer side of the conductor 2, an insulation layer 4 disposed on an outer side of the internal semiconductor layer 3 and consisting of the insulating resin composition, and an external semiconductor layer 5 disposed on an outer side of the insulation layer 4. The internal semiconductor layer 3 encircles the conductor 2. The insulation layer 4 encircles the internal semiconductor layer 3. In the insulating resin composition in which the component (a) is the unmodified polypropylene, the insulation layer 4 is a non-crosslinked product (non-crosslinkable resin) made of the insulating resin composition, and in the insulating resin composition in which the component (a) is the unmodified polyethylene, the insulation layer 4 is a crosslinked product (crosslinkable resin) obtained by crosslinking the insulating resin composition. The external semiconductor layer 5 encircles the insulation layer 4. As described above, in the electric power cable 1, the internal semiconductor layer 3, the insulation layer 4, and the external semiconductor layer 5 are layered in this order on the conductor 2 made of a metal such as copper or aluminum.

For example, the internal semiconductor layer 3 and the external semiconductor layer 5 include an olefin-based elastomer as a non-crosslinkable resin and electroconductive carbon black, and include an ethylene-based copolymer such as an ethylene-ethyl acrylate copolymer, an ethylene-methyl acrylate copolymer, an ethylene-butyl acrylate copolymer, or an ethylene-vinyl acetate copolymer as a crosslinkable resin, and electroconductive carbon black.

In addition, the electric power cable 1 may further include a metal shielding layer (not shown) disposed on an outer side of the external semiconductor layer 5 and encircling the external semiconductor layer 5. In addition, the electric power cable 1 may further include a sheath (not shown) disposed on an outer side of the metal shielding layer and encircling the metal shielding layer.

The conductor 2 is continuously fed to the resin extrusion port, where the conductor 2 is coated with the internal semiconductor layer 3, the insulation layer 4 (insulating resin composition layer) and the external semiconductor layer 5. These three layers may be simultaneously extruded to coat the conductor 2, or may sequentially coat the conductor 2. When the conductor during coating is heated by heat transfer from the previously applied resin, since the cooling rate of the resin in the vicinity of the conductor becomes slow, it is preferable to adjust the temperature of the conductor to 1°C or more and 100°C or less by cooling, and then feed the conductor to the resin extrusion port.

Coating with the insulating resin composition is performed by extruding the resin toward the conductor 2 (on the internal semiconductor layer 3) from the resin extrusion port of a resin extruder equipped with a metal mesh filter having a sieve size of 100 µm or less for the purpose of removing foreign matters. The temperature of the insulating resin composition during extrusion is preferably equal to or higher than the melting point of the insulating resin composition. In particular, in the case of the crosslinkable resin, the temperature is preferably 110°C or more, more preferably 120°C or more, and preferably 140°C or less in order to suppress scorch. In the case of the non-crosslinkable resin, the temperature is preferably 140°C or more, more preferably 180°C or more, and preferably 300°C or less in order to prevent thermal decomposition of polypropylene.

After the conductor 2 is coated with the insulating resin composition layer in this manner, in the case of the crosslinkable resin, the insulation layer 4 obtained by crosslinking the insulating resin composition is formed by performing a crosslinking reaction of the insulating resin composition layer by pressure heating. In the case of the non-crosslinkable resin, the insulation layer 4 is formed by slowly cooling the insulating resin composition layer with air cooling at a temperature from normal temperature to 150°C under normal atmospheric pressure or pressurization. Thus, the electric power cable 1 is obtained. Thereafter, the electric power cable 1 is cooled by a cooling pipe or a cooling water tank, and if necessary, a metal shielding layer or a sheath (not shown) is formed by an ordinary method.

The thickness of the insulation layer 4 is preferably 2 mm or more, more preferably 5 mm or more, and even more preferably 10 mm or more from the viewpoint of the insulating property, and is preferably 50 mm or less, and more preferably 40 mm or less from the viewpoint of the laying workability.

In addition, the thickness of the internal semiconductor layer 3 and the thickness of the external semiconductor layer 5 are both preferably 0.1 mm or more, and more preferably 0.5 mm or more, from the viewpoint of the insulating property, and are both preferably 5.0 mm or less, more preferably 3.0 mm or less, and even more preferably 2.0 mm or less, from the viewpoint of electrical conductive property.

According to the embodiment described above, even when the insulating resin composition includes the ethylene-based copolymer which contains the carboxylate ester as the component (c) in order to suppress the growth of water tree, the increase in the dielectric loss tangent due to the component (c) can be suppressed by including a resin which contains, as the constituent component, at least one type of compound selected from unsaturated organic acids or derivatives thereof as the component (b). Then, by applying the insulating resin composition capable of suppressing the growth of water tree and reducing the dielectric loss tangent to the insulation layer of the electric power cable, the electric power transmission efficiency of the electric power cable can be improved.

Although the embodiments have been described above, the present invention is not limited to the above embodiments, and various modifications can be made within the scope of the present disclosure, including all aspects included in the concept of the present disclosure and the claims.

### EXAMPLES

Next, Examples and Comparative Examples will be described, but the present invention is not limited to these Examples.

The raw materials used in the Examples and the Comparative Examples are as follows.

The component (a) is as follows:
· component (a-1): unmodified polypropylene (B241: random polypropylene manufactured by Prime Polymer Co., Ltd., MFR: 0.5); and
· component (a-2): unmodified polyethylene (CE1559: polyethylene manufactured by Sumitomo Chemical Company, MFR: 0.6).

The component (b) is as follows:
· component (b-1): maleic anhydride-grafted PE resin (Modic L553: 1.00 wt% of maleic anhydride-grafted PE resin manufactured by Mitsubishi Chemical Corporation);
· component (b-2): maleic anhydride-grafted PP resin (Admer QE800: 0.4 wt% of maleic anhydride-grafted PP resin manufactured by Mitsui Chemicals, MFR: 9.1); and
· component (b-3): ethylene-maleic anhydride copolymer (Fusabond M603: 18 wt% maleic anhydride manufactured by Dow Corporation, MFR: 25.0).

The component (c) is as follows:
· component (c-1): ethylene-acrylic acid ester copolymer (NUC-6520: EEA manufactured by Eneos NUC, containing 24 wt% of acrylate, MFR: 1.6);
· component (c-2): ethylene-methyl methacrylate copolymer (Acryft WH102: EMMA manufactured by Sumitomo Chemical Company, containing 17 wt% of methyl methacrylate, MFR: 0.25); and
· component (c-3): ethylene-vinyl acetate copolymer (NUC-3888: EVA manufactured by Eneos NUC, containing 21 wt% of vinyl acetate, MFR: 1.8).

The component (d) is as follows:
· component (d-1): olefin-based elastomer (Catalloy Q100F: TPO manufactured by SunAllomer, thermoplastic elastomer consisting of a propylene-α-olefin copolymer and polypropylene, MFR: 0.6);
· component (d-2): ethylene-propylene copolymer (Esprene SPO P-4801, EPR manufactured by Sumitomo Chemical Company); and
· component (d-3): styrene-based elastomer (Septon 8066: SEBS manufactured by Kuraray, styrene content: 33 wt%, MFR: no flowability).

The component (e) is as follows:
· component (e-1): crosslinking agent (Percumyl D; dicumyl peroxide manufactured by NOF Company).

Components other than the above components are as follows:
· antioxidant (Irganox1010; hindered phenol-based antioxidant manufactured by BASF), and
· polyethylene glycol (PEG-20000: polyethylene glycol manufactured by Adeka Corporation, number average molecular weight 20000).

### (Examples 1 to 14 and Comparative Examples 1 to 2)

Raw materials were dry-blended using a Henschel mixer in the formulations shown in Tables 1 and 3, and then the resulting mixture was extruded by a single-screw extruder (L/D = 24, resin discharge temperature: 200°C) equipped with a plain weave mesh having the sieve size of 0.091 mm to obtain pellet-shaped insulating resin composition (hereinafter, also referred to as resin pellet) having the composition (part by mass) shown in Tables 1 and 3.

### (Examples 21 to 31 and Comparative Examples 11 to 12)

Resin pellet having the composition (parts by mass) shown in Tables 2 and 4 was obtained in the same manner as in Example 1 except that the resin discharge temperature was changed to 120°C.

### [Measurement and Evaluation]

The insulating resin compositions obtained in the above Examples and Comparative Examples were subjected to the following measurements and evaluations. The results are shown in Tables 1 to 4.

### [1] Moisture Absorption Rate

Using the resin pellet, a sheet-shaped sample having a length of 100 mm, a width of 150 mm, and a thickness of 1 mm was molded. In Examples 1 to 14 and Comparative Examples 1 and 2 based on the unmodified polypropylene, the sample was obtained by pressure molding at 230°C. In Examples 21 to 31 and Comparative Examples 11 and 12 based on the unmodified polyethylene, the sample was obtained by pressure molding at 120°C for 10 minutes and then crosslinking at 160°C for 30 minutes. The sheet-shaped sample thus obtained was divided into six pieces to obtain test pieces. Next, the test pieces were stored in a thermohygrostat bath at 70°C and a relative humidity of 90% for 24 hours and then taken out, and the moisture content was measured by Karl Fischer method of method B (moisture vaporization method) of JIS K7251 to determine the moisture absorption rate.

### [2] Water Tree Length

First, a small-sized electric power cable was manufactured. By extruding the insulating resin composition using a single-screw extruder (L/D=24, full flight screw) equipped with a plain weave mesh of 0.091 mm sieve size and charged with resin pellets, and also by extruding the internal semiconductor layer and the external semiconductor layer using another single-screw extruder (L/D=24, full flight screw) equipped with a plain weave mesh of 0.091 mm sieve size and charged with a semiconductive material resin, a batch coating in order of an internal semiconductor layer, an insulation layer (insulating resin composition), and an external semiconductor layer was performed on a copper conductor with a three-layer head. At this time, the internal semiconductor layer, the insulation layer, and the external semiconductor layer were extruded at 200°C in Examples 1 to 14 and Comparative Examples 1 and 2, where the layers were based on the unmodified polypropylene. In Examples 21 to 31 and Comparative Examples 11 and 12, where the layers were based on the unmodified polyethylene, the internal semiconductor layer, the insulation layer, and the external semiconductor layer were extruded at 120°C.

In addition, as the semiconductive material resins of Examples 1 to 14 and Comparative Examples 1 and 2, those obtained by dry-blending 30 parts of EVA450 (ethylene-vinyl acetate copolymer resin manufactured by Dow-Mitsui Polychemicals Co., Ltd.), 70 parts of elastomer Q200F (TPO manufactured by SunAllomer, MFR: 0.8), 30 parts of Denka Black (carbon black manufactured by Denka Company Ltd.), and 0.5 parts of an antioxidant (Nocrac 300, hindered phenol-based antioxidant manufactured by Ouchi Shinko Chemical Industrial) by a Henschel mixer, and extruding the obtained mixture by a single-screw extruder (L/D=24, 200°C), followed by pelletization. As the semiconductive material resins of Examples 21 to 31 and Comparative Examples 11 and 12, NUCV-9590 (semiconductive resin composition based on an ethylene-ethyl acrylate copolymer manufactured by Eneos NUC) was used.

Next, the cables after coating were air-cooled and then cooled in a water tank in Examples 1 to 14 and Comparative Examples 1 and 2. In Examples 21 to 31 and Comparative Examples 11 and 12, heat crosslinking was performed through a pressure crosslinking pipe at 260°C and 0.5 MPa, followed by cooling in a water tank. In this way, a small-sized electric power cable including the copper conductor having an outer diameter of about 2 mm, the internal semiconductor layer having a thickness of about 0.5 mm, the insulation layer having a thickness of about 2 mm, and the external semiconductor layer having a thickness of about 0.5 mm was obtained.

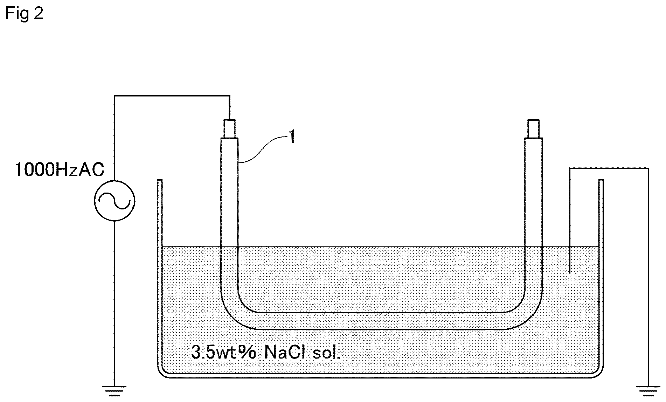

Next, as shown in FIG. 2, the obtained small-sized electric power cable 1 was immersed in a 3.5 wt% NaCl aqueous solution, and 1000 Hz AC voltage at 4 kV was applied between the conductor and the NaCl aqueous solution for 200 hours to perform the water tree test. Ten samples obtained by slicing the tested electric power cable into 1 mm thickness round slices were observed by optical microscope, and the maximum length of the generated water trees was measured. Samples having water tree with a length of less than 150 µm were judged to pass as the growth of water tree was suppressed, and samples having water tree with a length of 150 µm or more were judged to fail as the growth of water tree was not suppressed.

### [3] Dielectric Loss Tangent (tan δ)

Using the electric power cable produced as described above, the dielectric loss tangent before moisture absorption was measured under the conditions of 90°C and 30 kV/mm in accordance with the test methods for rubber or plastic insulated wires and cables of JIS C 3005. Next, after the electric power cable was stored in a thermohygrostat bath at 70°C and a relative humidity of 90% for 24 hours, the surface of the external semiconductor layer of the electric power cable was wound with aluminum tape in order to prevent volatilization of moisture due to heating during the measurement, and the dielectric loss tangent after the moisture absorption was measured under the conditions of 90°C and 30 kV/mm in accordance with the test methods for rubber or plastic insulated wires and cables of JIS C 3005 in the same manner as described above. With both the cables before and after the moisture absorption, the dielectric loss tangent measured under the conditions of 90°C and 30 kV/mm is preferably 1.00% or less, and more preferably 0.50% or less.

**[Table 1]**

| | | Example 1 | Example 2 | Example 3 | Example 4 | Example 5 | Example 6 | Example 7 | Example 8 | Example 9 | Example 10 | Example 11 | Example 12 | Example 13 | Example 14 |
|---|---|---|---|---|---|---|---|---|---|---|---|---|---|---|---|
| Component (a) | Component (a-1) | 89.8 | 84.8 | 49.8 | 59.8 | 79.8 | 79.8 | 79.8 | 79.8 | 82.3 | 29.8 | 79.8 | 85.8 | 81.8 | 62.3 |
| Component (b) | Component (b-1) | - | - | - | - | - | - | - | 5.0 | - | - | - | - | - | - |
| | Component (b-2) | 5.0 | 3.0 | 20.0 | 20.0 | 5.0 | 5.0 | 5.0 | - | - | 5.0 | 5.0 | 3.0 | 3.0 | - |
| | Component (b-3) | - | - | - | - | - | - | - | - | 2.5 | - | - | - | - | 2.5 |
| Component (c) | Component (c-1) | 5.0 | 2.0 | 20.0 | 10.0 | 5.0 | 5.0 | - | 5.0 | 5.0 | 5.0 | - | 1.0 | 5.0 | 25.0 |
| | Component (c-2) | - | - | - | - | - | - | - | - | - | - | 5.0 | - | - | - |
| | Component (c-3) | - | - | - | - | - | - | 5.0 | - | - | - | - | - | - | - |
| Component (d) | Component (d-1) | - | - | - | - | - | - | - | - | - | 60.0 | - | - | - | - |
| | Component (d-2) | - | 10.0 | 10.0 | 10.0 | 10.0 | - | 10.0 | 10.0 | 10.0 | - | - | 10.0 | 10.0 | 10.0 |
| | Component (d-3) | - | - | - | - | - | 10.0 | - | - | - | - | 10.0 | - | - | - |
| Antioxidant | | 0.2 | 0.2 | 0.2 | 0.2 | 0.2 | 0.2 | 0.2 | 0.2 | 0.2 | 0.2 | 0.2 | 0.2 | 0.2 | 0.2 |
| Moisture absorption rate (ppm) | | 100 | 100 | 150 | 155 | 100 | 100 | 110 | 100 | 100 | 110 | 110 | 100 | 100 | 450 |
| Water tree length (µm) | | 110 | 100 | 75 | 75 | 90 | 90 | 90 | 90 | 90 | 90 | 90 | 140 | 80 | 140 |
| tan δ before water absorption (%) | | 0.10 | 0.10 | 0.20 | 0.10 | 0.10 | 0.10 | 0.10 | 0.20 | 0.20 | 0.20 | 0.10 | 0.20 | 0.20 | 0.20 |
| tan δ after water absorption (%) | | 0.20 | 0.20 | 0.40 | 0.40 | 0.20 | 0.20 | 0.30 | 0.30 | 0.30 | 0.20 | 0.30 | 0.30 | 0.70 | 0.40 |

**[Table 2]**

| | | Example 21 | Example 22 | Example 23 | Example 24 | Example 25 | Example 26 | Example 27 | Example 28 | Example 29 | Example 30 | Example 31 |
|---|---|---|---|---|---|---|---|---|---|---|---|---|
| Component (a) | Component (a-2) | 89.8 | 94.8 | 59.3 | 90.8 | 82.8 | 87.8 | 87.8 | 90.3 | 87.8 | 91.8 | 65.3 |
| Component (b) | Component (b-1) | 5.0 | 1.0 | 20.0 | 5.0 | 5.0 | 5.0 | 5.0 | - | 5.0 | 5.0 | - |
| | Component (b-3) | - | - | - | - | - | - | - | 2.5 | - | - | 2.5 |
| Component (c) | Component (c-1) | 5.0 | 2.0 | 20.0 | 2.0 | 10.0 | 5.0 | - | 5.0 | - | 1.0 | 30.0 |
| | Component (c-2) | - | - | - | - | - | - | - | - | 5.0 | - | |
| | Component (c-3) | - | - | - | - | - | - | 5.0 | - | - | - | - |
| Component (e) | Component (e-1) | - | 2.0 | 0.5 | 2.0 | 2.0 | 2.0 | 2.0 | 2.0 | 2.0 | 2.0 | 2.0 |
| Antioxidant | | 0.2 | 0.2 | 0.2 | 0.2 | 0.2 | 0.2 | 0.2 | 0.2 | 0.2 | 0.2 | 0.2 |
| Moisture absorption rate (ppm) | | 100 | 100 | 150 | 100 | 110 | 100 | 100 | 120 | 100 | 100 | 350 |
| Water tree length (µm) | | 90 | 90 | 70 | 90 | 90 | 90 | 90 | 90 | 90 | 140 | 140 |
| tan δ before water absorption (%) | | 0.10 | 0.10 | 0.15 | 0.10 | 0.10 | 0.10 | 0.10 | 0.10 | 0.10 | 0.10 | 0.15 |
| tan δ after water absorption (%) | | 0.20 | 0.20 | 0.40 | 0.20 | 0.30 | 0.20 | 0.20 | 0.20 | 0.20 | 0.20 | 0.50 |

**[Table 3]**

| | | Comparative Example 1 | Comparative Example 2 |
|---|---|---|---|
| Component (a) | Component (a-1) | 84.8 | 87.8 |
| Component (b) | Component (b-1) | - | - |
| | Component (b-2) | - | - |
| | Component (b-3) | - | - |
| Component (c) | Component (c-1) | 5.0 | - |
| | Component (c-2) | - | - |
| | Component (c-3) | - | - |
| Component (d) | Component (d-1) | - | - |
| | Component (d-2) | 10.0 | 10.0 |
| | Component (d-3) | - | - |
| Polyethylene glycol | | - | 2.0 |
| Antioxidant | | 0.2 | 0.2 |
| Moisture absorption rate (ppm) | | 95 | 4000 |
| Water tree length (µm) | | 80 | 60 |
| tan δ before water absorption (%) | | 1.50 | 1.50 |
| tan δ after water absorption (%) | | 3.00 | 20.00 |

**[Table 4]**

| | | Comparative Example 11 | Comparative Example 12 |
|---|---|---|---|
| Component (a) | Component (a-2) | 92.8 | 90.8 |
| Component (b) | Component (b-1) | - | 5.0 |
| | Component (b-3) | - | - |
| Component (c) | Component (c-1) | 5.0 | - |
| | Component (c-2) | - | - |
| | Component (c-3) | - | - |
| Component (e) | Component (e-1) | 2.0 | 2.0 |
| Polyethylene glycol | | - | 2.0 |
| Antioxidant | | 0.2 | 0.2 |
| Moisture absorption rate (ppm) | | 70 | 4000 |
| Water tree length (µm) | | 90 | 70 |
| tan δ before water absorption (%) | | 1.50 | 1.50 |
| tan δ after water absorption (%) | | 2.00 | 20.00 |

As shown in Table 1, in the above Examples, since the insulating resin composition included the component (a), the component (b), and the component (c), the growth of water tree could be suppressed and the increase in the dielectric loss tangent could be suppressed even in the water-rich environment. On the other hand, in the above Comparative Examples, since the insulating resin composition did not include at least one of the components (a) to (c), the growth of water tree and the increase in the dielectric loss tangent under the water-rich environment could not be suppressed. In particular, in Comparative Examples 1 and 11, the dielectric loss tangents before and after the moisture absorption increased because the insulating resin composition did not include the component (b). In addition, in Comparative Examples 2 and 12, since the insulating resin composition included polyethylene glycol, the amount of moisture absorption was large, the dielectric loss tangent before the moisture absorption increased, and the dielectric loss tangent after the moisture absorption significantly increased.

### EXPLANATION OF REFERENCE NUMERALS

- 1: Electric power cable
- 2: Conductor
- 3: Internal semiconductor layer
- 4: Insulation layer
- 5: External semiconductor layer

## Claims

1. An insulating resin composition for electric power cable,
comprising: a component (a); a component (b); and a component (c), wherein
the component (a) is an unmodified polyolefin resin,
the component (b) is a resin including at least one type of compound selected from unsaturated organic acids or derivatives thereof as a constituent component, and
the component (c) is an ethylene-based copolymer including a carboxylate ester.

2. The insulating resin composition for electric power cable according to claim 1, wherein the component (a) is an unmodified polypropylene.

3. The insulating resin composition for electric power cable according to claim 2, further comprising a component (d), wherein the component (d) is an olefin-based copolymer or a styrene-based copolymer.

4. The insulating resin composition for electric power cable according to claim 1, wherein the component (a) is an unmodified polyethylene.

5. The insulating resin composition for electric power cable according to claim 4, further comprising a component (e), wherein the component (e) is a crosslinking agent.

6. The insulating resin composition for electric power cable according to claim 5, wherein the crosslinking agent is an organic peroxide.

7. The insulating resin composition for electric power cable according to claim 1, wherein the component (b) is at least one type of resin selected from polyolefins in which at least one type of compound selected from maleic anhydride or a derivative thereof is grafted, or maleic anhydride copolymers.

8. The insulating resin composition for electric power cable according to claim 1, wherein the component (c) is at least one type of ethylene-based copolymer selected from ethylene-methacrylic acid ester copolymers, ethylene-acrylic acid ester copolymers, or ethylene-vinyl acetate copolymers.

9. An electric power cable comprising:
a conductor;
an internal semiconductor layer disposed on an outer side of the conductor, and encircling the conductor;
an insulation layer disposed on an outer side of the internal semiconductor layer, encircling the internal semiconductor layer, and consisting of the insulating resin composition for electric power cable according to any one of claims 1 to 8; and
an external semiconductor layer disposed on an outer side of the insulation layer, and encircling the insulation layer.
